# EUROPÄISCHE PATENTSCHRIFT

(11) **EP 0 570 821 B1**
(45) Veröffentlichungstag und Bekanntmachung des Hinweises auf die Patenterteilung: **24.07.1996**
(21) Anmeldenummer: 93107689.7
(22) Anmeldetag: 11.05.1993
(51) Int. Cl.: H02H 9/02, H02M 3/135, G05F 1/571

(54) **Aktives Freilaufelement**
Active free-wheeling element
Elément de roue libre actif

(30) Priorität: 14.05.1992 DE 4215980
(43) Veröffentlichungstag der Anmeldung: 24.11.1993
(73) Patentinhaber: SIEMENS AKTIENGESELLSCHAFT, 80333 München (DE)
(72) Erfinder: Erckert, Ricardo, Dipl.-Ing., W-8019 Assling (DE); Lenz, Michael, W-8011 Zorneding (DE)

(56) Entgegenhaltungen:
- EP-A- 0 380 881
- DE-B- 2 839 190
- DE-C- 3 203 987
- US-A- 4 672 303
- US-A- 4 882 532

## Beschreibung

Die Erfindung betrifft ein aktives Freilaufelement, wie es in sekundär getakteten Schaltreglern verwendbar ist, nach dem Oberbegriff des Patentanspruches 1. Insbesondere betrifft sie eine weitgehend monolithisch integrierbare Wechselschaltvorrichtung für einen solchen Schaltregler.

Wie aus Tietze/Schenk, Halbleiterschaltungstechnik, 9. Aufl. 1991 im Kapitel 18.6 "Sekundär getaktete Schaltregler" auf den Seiten 563 ff., insbesondere Kapitel 18.6.1 auf den Seiten 563 bis 566 beschrieben wird, enthalten sekundär getaktete Schaltregler je nach Ausführungsart einen Wechselschalter, der üblicherweise von einer Regel- und Steuerschaltung angesteuert eine Induktivität periodisch entweder zwischen der Eingangsspannung und dem Bezugspotential oder der Ausgangsspannung und dem Bezugspotential oder zwischen der Eingangsspannung und der Ausgangsspannung umschaltet. Bisher werden solche Wechselschalter durch einen elektronischen Leistungsschalter und eine sogenannte Freilaufdiode realisiert. Als Leistungsschalter ist hierbei entweder ein Thyristor oder ein Bipolar- oder Feldeffekttransistor vorgesehen. Der Wirkungsgrad von Schaltnetzteilen hängt jedoch in diesem Fall von der Flußspannung der Freilaufdiode ab. Insbesondere bei Schaltnetzteilen mit hoher Spannungsuntersetzung, also sogenannten Abwärtswandlern, hängt der Wirkungsgrad des Schaltnetzteiles sehr stark von der Flußspannung einer Freilaufdiode ab. Bei Schaltnetzteilen mit niedriger Ausgangsspannung wie z.B. 5 V für Logikversorgungen, tritt dieser Einfluß besonders stark auf. Eine Verbesserung des Wirkungsgrades solcher Schaltnetzteile war bisher nur durch Verwenden von Schottky-Dioden möglich, die bekanntermaßen eine Flußspannung von ca. 0,4 V haben im Gegensatz zu üblichen Siliziumdioden mit einer Flußspannung von ca. 0,65 bis 0,8 V. Eine Integration von Schottke-Dioden ist jedoch sehr flächenintensiv und daher teuer und außerdem nicht in allen Halbleitertechnologien vorgesehen. Daher ist für solche Schaltnetzteile nicht nur der Leistungsschalter als diskretes Bauelement erforderlich, sondern auch die Freilaufdiode.

Aufgabe der vorliegenden Erfindung ist es, ein monolithisch integrierbares Freilaufelement mit geringer Flußspannung bereitzustellen.

Diese Aufgabe wird gelöst durch eine Schaltungsanordnung mit den Merkmalen des Patentanspruches 1. Günstige Ausgestaltungsformen sind Gegenstand von Unteransprüchen.

Erfindungsgemäß wird ein Freilaufelement aus einem npn-Transistor vorgeschlagen, dessen Emitteranschluß wie der Anodenanschluß einer ersetzten Freilaufdiode beschaltet wird und dessen Kollektoranschluß wie der Kathodenanschluß dieser Freilaufdiode beschaltet wird. Der Basisanschluß dieses Transistors wird in Abhängigkeit von der Spannung am Emitter des Transistors angesteuert. Hierzu wird die Spannung am Emitter des Transistors überwacht. Fällt sie unter 0 V, so wird der Transistor angesteuert, so daß er wie eine Freilaufdiode wirkt. Hierbei sollte der Transistor möglichst nahe an der Sättigung, evtl. sogar im Sättigungsbereich betrieben werden. Dadurch kann die über dem Transistor abfallende Flußspannung in Abhängigkeit vom Kollektorstrom auf einen Wert von 0,1 bis 0,5 V verringert werden. Die Flußspannung durch eine übliche Diode würde bei entsprechendem Strom zwischen 0,6 und 0,9 V liegen.

Es ist darauf zu achten, daß der verwendete, die Freilaufdiode ersetzende Transistor eine ausreichend hohe Basisemittersperrspannung hat, damit er bei durchgeschaltetem Leistungsschalter nicht aufgrund der anliegenden Eingangsspannung durchbricht. Entsprechende Transistoren sind in der US 4,038,680 A, in der DE 39 10 526 A1 und auch in der EP 0 482 241 A1 beschrieben.

Bei monolithischer Integration einer erfindungsgemäßen Transistoranordnung zum Ersetzen einer Freilaufdiode, die üblicherweise aus einem besagten npn-Transistor und einer Treiberschaltung besteht, sollte günstigerweise zur Verminderung der Ansteuerverluste die Treiberanordnung bei Verwendung in einer Tiefsetzstellerschaltung ihre Versorgungsspannung von der bereits herabgesetzten (Sekundär-) Spannung beziehen.

In einer vorteilhaften Ausgestaltungsform der Erfindung wird der npn-Transistor von einer Treiberschaltung in Abhängigkeit von dem Betrag einer negativen Emitter-Kollektorspannung bzw. einer positiven Kollektor-Emitterspannung des Transistors leitend gesteuert, wodurch die durch den Basisstrom bedingte Verlustleistung begrenzt ist, obwohl der Transistor mindestens nahezu in die Sättigung gesteuert wird.

Nachfolgend wird die Erfindung anhand der Figuren näher erläutert. Es zeigt:
- Figur 1: als Übersicht die Darstellung eines Ausführungsbeispieles einen Tiefsetzsteller unter Verwendung einer erfindungsgemäßen Schaltungsanordnung;
- Figur 2: das Schaltbild einer besonders günstigen Ausgestaltungsform einer Anordnung nach Figur 1.

Die dem Fachmann bekannte Ansteuerschaltung für den Leistungsschalter eines solchen Schaltreglers ist jeweils aus Gründen der Übersichtlichkeit nicht im einzelnen dargestellt.

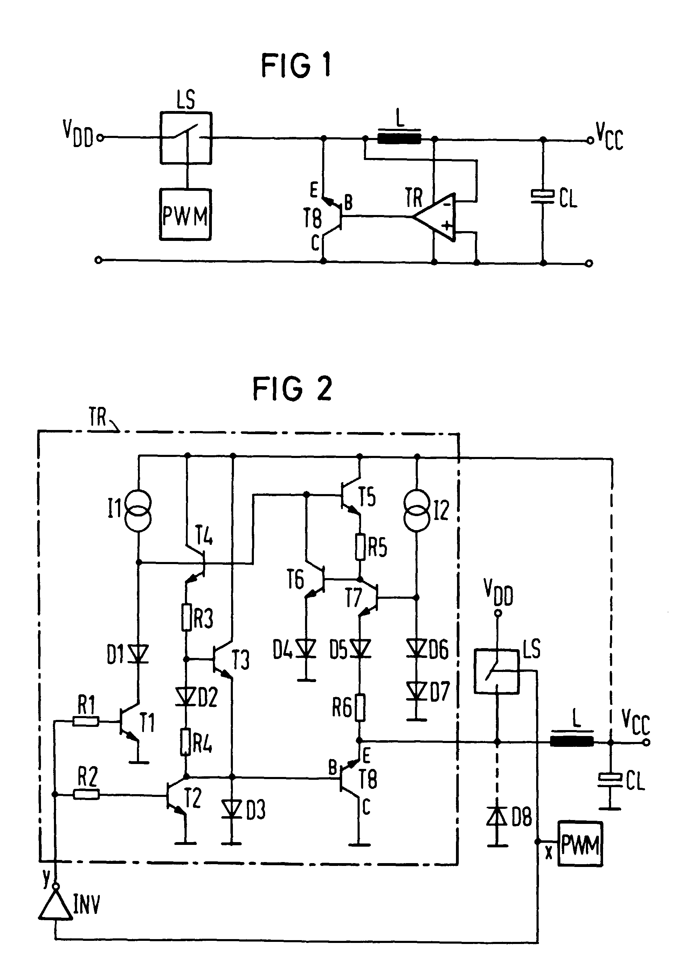

Figur 1 zeigt einen elektronischen Leistungsschalter LS, der von einem Pulsweitenmodulator PWM in bekannter Weise angesteuert wird. Der Eingangsanschluß des elektronischen Leistungsschalters LS wird mit einem Potential V_{DD} einer gegen Bezugspotential Masse wirksamen Eingangsspannung verbunden. Der Ausgangsanschluß des elektronischen Leistungsschalters LS ist mit einem Anschluß einer Induktivität (Drossel) L zusammengeschaltet. Der andere Anschluß dieser Induktivität L ist mit einem ein Ausgangspotential V_{CC} des dargestellten Schaltreglers abgebenden Ausgangsklemme verbunden. Die Ausgangsklemme mit dem Potential V_{CC} ist über eine Kapazität CL an das Bezugspotential Masse geschaltet. Außerdem ist sie mit einem Versorgungsspannungsanschluß einer Treiberschaltung TR verbunden. Der andere Versorgungsspannungsanschluß dieser Treiberschaltung TR ist mit dem Bezugspotential Masse verbunden. Die Treiberschaltung TR hat einen invertierenden und einen nichtinvertierenden Eingang sowie einen Ausgangsanschluß. Der Ausgangsanschluß der Treiberschaltung ist mit dem Basisanschluß B eines Transistors T8 zusammengeschaltet. Der Emitteranschluß dieses Transistors T8 sowie der invertierende Eingang der Treiberschaltung TR sind mit dem Verbindungsknoten zwischen dem Leistungsschalter LS und der Induktivität L verbunden. Der Kollektoranschluß C des Transistors T8 ist mit dem Bezugspotential Masse verbunden. Dargestellt ist hierbei eine prinzipiell bekannte Tiefsetzstelleranordnung, wobei die in bekannten Anordnungen vorgesehene Freilaufdiode durch den Transistor T8 und die ihn ansteuernde Treiberschaltung TR ersetzt ist. Der Transistor T8 ist als npn-Transistor ausgebildet, und die Spannung am Emitteranschluß E dieses Transistors T8 wird von der Treiberschaltung TR in Bezug auf das Bezugspotential Masse verglichen. Sobald die Spannung am Emitter des Transistors T8 unter 0 V fällt, wird der Transistor an seinem Basisanschluß B durch die Treiberschaltung TR angesteuert. Hierbei sollte darauf geachtet werden, daß günstigerweise die Treiberschaltung TR einen entsprechend großen Basisstrom in den Basisanschluß des Transistors T8 einspeist, daß in Abhängigkeit von der Stromverstärkung dieses Transistors T8 dieser im Sättigungsbereich betrieben wird.

Figur 2 zeigt eine besonders günstige Realisierungsform einer Schaltungsanordnung nach Figur 1. Schaltungsteile mit gleichen Funktionen haben in den Figuren gleiche Bezugszeichen. Figur 2 zeigt einen Leistungsschalter LS, der ein Eingangspotential V_{DD} an einen Schaltungsknoten schalten kann, der seinerseits über eine Induktivität L an eine Ausgangsklemme geschaltet ist, die ein Ausgangspotential V_{CC} bereitstellt. Außerdem ist dieser Schaltungsknoten mit dem Emitteranschluß E eines Transistors T8 verbunden sowie mit einem Anschluß eines Widerstandes R6. Unterbrochen dargestellt ist außerdem an diesen Schaltungsknoten der Anodenanschluß einer Diode D8 angeschaltet, deren Kathodenanschluß an Bezugspotential Masse geschaltet ist. Der Kollektoranschluß des npn-Transistors T8 ist gegen Bezuspotential Masse geschaltet. Der Basisanschluß des Transistors T8 ist mit dem Kathodenanschluß einer Diode D3 verbunden, deren Anodenanschluß mit dem Bezugspotential Masse zusammengeschaltet ist. Außerdem ist der Basisanschluß des Transistors T8 mit dem Emitteranschluß eines Transistors T3, mit dem Kollektoranschluß eines Transistors T2 und mit einem Anschluß eines Widerstandes R4 verbunden. Der Kollektoranschluß des Transistors T3 ist mit einem Versorgungspotential beaufschlagt, wie durch eine unterbrochene Linie zu dem Ausgangsanschluß des dargestellten Schaltreglers angedeutet ist. Der Basisanschluß des Transistors T3 ist mit dem Anodenanschluß einer Diode D2 verbunden, deren Kathodenanschluß an den anderen Anschluß des besagten Wiederstandes R4 geschaltet ist. Darüber hinaus ist der Basisanschluß des Transistors T3 mit einem Anschluß eines Widerstandes R3 verbunden, dessen anderer Anschluß mit dem Emitteranschluß eines Transistors T4 zusammengeschaltet ist. Der Kollektoranschluß dieses Transistors T4 ist mit dem gleichen Versorgungspotential beaufschlagt wie der Kollektoranschluß des Transistors T3. Eine Stromquelle I1 ist mit ihrem Stromeingang ebenfalls an dieses Versorgungspotential geschaltet. Der Stromausgang dieser Stromquelle I1 ist mit dem Basisanschluß des Transistors T4, mit dem Basisanschluß eines Transistors T5, mit dem Kollektoranschluß eines Transistors T6 und außerdem mit dem Anodenanschluß einer Diode D1 verbunden. Der Kathodenanschluß dieser Diode D1 ist mit dem Kollektoranschluß eines Transistors T1 verbunden, dessen Emitteranschluß gegen Bezugspotential Masse geschaltet ist. Der Basisanschluß des Transistors T1 ist über einen Widerstand R1 an einen Steuerknoten y geschaltet. Dieser Steuerknoten y ist über einen weiteren Widerstand R2 mit dem Basisanschluß des Transistors T2 verbunden. Der Steuerknoten y ist mit dem Ausgang einer Invertiererschaltung INV zusammengeschaltet, deren Eingang mit einem Steueranschluß x verbunden ist. Der Steueranschluß x ist außerdem mit dem Steuereingang des Leistungsschalters LS verbunden und wird von einer Pulsweitenmodulatorschaltung PWM angesteuert. Der Kollektoranschluß des Transistors T5 ist mit dem gleichen Versorgungspotential beaufschlagt wie der Kollektoranschluß des Transistors T4. Der Emitteranschluß des Transistors T5 ist über einen Widerstand R5 mit dem Basisanschluß eines Transistors T6 sowie dem Kollektoranschluß eines Transistors T7 verbunden. Der Emitteranschluß des Transistors T6 ist mit dem Anodenanschluß einer Diode D4 verbunden, deren Kathodenanschluß gegen Bezugspotential Masse geschaltet ist. Der Basisanschluß des Transistors T7 ist mit dem Stromausgang einer Stromquelle I2 verbunden und außerdem mit dem Anodenanschluß einer Diode D6 zusammengeschaltet, deren Kathodenanschluß mit dem Anodenanschluß einer Diode D7 verbunden ist. Der Kathodenanschluß der Diode D7 ist gegen Bezugspotential Masse geschaltet. Der Stromeingang der Stromquelle I2 ist mit dem gleichen Versorgungspotential beaufschlagt, wie die Kollektoranschlüsse der Transistoren T3, T4 und T5. Der Emitteranschluß des Transistors T7 ist mit dem Anodenanschluß einer Diode D5 verbunden, deren Kathodenanschluß über den besagten Widerstand R6 an den Emitteranschluß des Transistors T8 geschaltet ist. Die dargestellten Dioden werden üblicherweise in integrierten Halbleiterschaltungen durch entsprechend geschaltete Transistoren realisiert.

In einer günstigen Realisierungsform der in Figur 2 dargestellten Schaltung sind die Ströme der Stromquellen I1 und I2 jeweils 50 µA. Für die Widerstände haben sich folgende günstige Werte ergeben: R1 = 20 kOhm, R2 = 6 kOhm, R3 = 200 Ohm, R4 = 100 Ohm, R5 = 3 kOhm und R6 = 7 kOhm.

Der Transistor T7 bildet gemeinsam mit den Dioden D5, D6 und D7 eine Differenzverstärkeranordnung. Der Transistor T6 ist als Regeltransistor vorgesehen, der Transistor T3 als Stromverstärker. Die Transistoren T1 und T2 sind als Abschalter vorgesehen. Die durch die Transistoren T4, T5 und T6 in Verbindung mit den Widerständen R3 und R5 realisierte Schaltung bewirkt eine Spannungstransformation, wobei über den Widerstand R3 eine Spannung abfällt, die proportional zu der über den Widerstand R5 abfallenden Spannung ist.

Wenn U_{BE} die übliche Basis-Emitterspannung eines Bipolartransistors in der Schaltung nach Figur 2 ist und U_{Sat} die übliche Sättigungsspannung, so liegen in der Treiberschaltung nach Figur 2 dann, wenn der Transistor T8 gesperrt ist folgende Spannungsverhältnisse vor: Am Basisanschluß des Transistors T6 bzw. am Kollektoranschluß des Transistors T7 liegt eine Spannung von 2 U_{BE} an, am Basisanschluß der Transistoren T4 und T5 bzw. am Kollektoranschluß des Transistors T6 liegen drei U_{BE} an. Über den Widerstand R3 fällt eine Spannung von U_{BE}-U_{Sat} ab. Die Kollektoremitterspannung des Transistors T2 ist U_{Sat} (ca. 0,1 V) und der Kollektorstrom des Transistors T4 ergibt sich aus der Differenz aus einer Basis-Emitterspannung U_{BE} und einer Sättigungsspannung U_{Sat} dividiert durch den Widerstandswert des Widerstandes R3.

Der Schaltungsteil bestehend aus dem Widerstand R1, dem Transistor T1 und der Diode D1 dient als zusätzlicher Abschalter und verhindert einen Querstrom durch den Transistor T4. Wird die Treiberanordnung von der herabgesetzten Ausgangsspannung des Schaltnetzteiles versorgt, so empfiehlt es sich, parallel zur Kollektoremitterstrecke des Transistors T8 die Diode D8 vorzusehen. Wenn nämlich größere Freilaufströme geführt werden müssen, so wird eine entsprechend rückspannungsfeste Transistoranordnung, wie sie als Transistor T8 verwendet werden muß, bei integrierter Schaltungstechnik sehr flächenintensiv. Durch Parallelschalten einer entsprechenden Diode D8 kann bei gleicher Wirkung der Schaltungsanordnung die Fläche des Transistors T8 erheblich kleiner ausfallen. Zudem erfolgt für den Fall, daß die Treiberschaltung von der Sekundärseite eines Tiefsetzstellers gespeist wird, der Anlauf dieses Schaltnetzteiles über diese Diode D8. In diesem Fall wird der geringe Spannungsabfall des Freilaufelementes erst wirksam, wenn die Treiberschaltung von der Ausgangsseite des Schaltnetzteiles versorgt werden kann.

## Patentansprüche

1. Monolithisch integriertes aktives Freilaufelement zur Verwendung in einer Wechselschaltvorrichtung mit induktiver Belastung, **gekennzeichnet** durch einen npn-Transistor (T8) als den Freilaufstrom führendes Element und durch eine Treiberschaltung (TR), deren Ausgangsanschluß mit dem Basisanschluß des Transistors (T8) verbunden ist und die den Transistor (T8) derart ansteuert, daß er weitgehend im Sättigungsbereich betrieben wird, falls die Kollektor-Emitterspannung des Transistors (T8) ein positives Vorzeichen erhält.

2. Aktives Freilaufelement nach Anspruch 1, **dadurch gekennzeichnet,** daß die Treiberschaltung (TR) den Transistor (T8) in Abhängigkeit von dem Betrag der positiven Kollektor-Emitterspannung des Transistors (T8) leitend steuert.

3. Verwendung eines Freilaufelementes nach einem der Ansprüche 1 oder 2 in einem Tiefsetzsteller mit einem Leistungsschalter, wobei die Ansteuerung des Freilaufelementes gegenzyklich zur Ansteuerung des Leistungsschalters erfolgt, so daß das Freilaufelement nur dann leitend schaltbar ist, wenn der Leistungsschalter gesperrt ist.

4. Verwendung eines aktiven Freilaufelementes nach Anspruch 3, **dadurch gekennzeichnet,** daß parallel zum aktiven Freilaufelement eine Freilaufdiode angeordnet ist.

5. Verwendung eines aktiven Freilaufelementes nach einem der Ansprüche 1 oder 2, bestehend aus einem npn-Transistor (T8) und einer den Basisanschluß des npn-Transistors ansteuernden Treiberschaltung (TR) in einem Tiefsetzsteller, **dadurch gekennzeichnet**, daß die Versorgungsspannung für die Treiberschaltung (TR) von der Ausgangsspannung des Tiefsetzstellers abgeleitet ist.

## Claims

1. Monolithically integrated active freewheeling element for use in a changeover switching device having an inductive load, characterized by an npn transistor (T8) as the element carrying the freewheeling current and by a driver circuit (TR), the output connection of which is connected to the base connection of the transistor (T8) and which drives the transistor (T8) in such a way that the latter is largely operated in the saturation region, if the collector-emitter voltage of the transistor (T8) acquires a positive sign.

2. Active freewheeling element according to Claim 1, characterized in that the driver circuit (TR) switches the transistor (T8) on as a function of the magnitude of the positive collector-emitter voltage of the transistor (T8).

3. Use of a freewheeling element according to either of Claims 1 and 2 in a step-down controller having a power circuit-breaker, the freewheeling element being driven in opposite cycles with respect to the driving of the power circuit-breaker, with the result that the freewheeling element can be switched on only when the power circuit-breaker is in the off state.

4. Use of an active freewheeling element according to Claim 3, characterized in that a freewheeling diode is arranged in parallel with the active freewheeling element.

5. Use of an active freewheeling element according to either of Claims 1 and 2, comprising an npn transistor (T8) and a driver circuit (TR), which drives the base connection of the npn transistor, in a step-down controller, characterized in that the supply voltage for the driver circuit (TR) is derived from the output voltage of the step-down controller.

## Revendications

1. Élément de roue libre actif intégré monolithiquement destiné à être utilisé dans un dispositif de commutateur va-et-vient à charge inductive, caractérisé par un transistor (T8) npn comme élément conduisant le courant de roue libre et par un circuit (TR) d'attaque, dont la borne de sortie est reliée à la borne de base du transistor (T8) et qui commande le transistor (T8) de telle sorte qu'il fonctionne dans une large mesure dans la zone de saturation, dans le cas où la tension collecteur-émetteur du transistor (T8) a un signe positif.

2. Élément de roue libre actif suivant la revendication 1, caractérisé en ce que le circuit (TR) d'attaque fait passer le transistor (T8) à l'état conducteur en fonction de la valeur de la tension positive collecteur-émetteur du transistor (T8).

3. Utilisation d'un élément de roue libre suivant l'une des revendications 1 ou 2, dans un montage dévolteur comportant un disjoncteur, la commande de l'élément de roue libre s'effectuant à l'opposé des cycles de commande du disjoncteur, de sorte que l'élément de roue libre ne puisse passer à l'état conducteur que lorsque le disjoncteur est ouvert.

4. Utilisation d'un élément de roue libre actif suivant la revendication 3, caractérisée en ce qu'une diode de roue libre est montée en parallèle avec l'élément actif de roue libre.

5. Utilisation d'un élément de roue libre actif suivant l'une des revendications 1 ou 2, constitué d'un transistor npn (T8) et d'un circuit (TR) d'attaque commandant la borne de base du transistor npn dans un montage dévolteur, caractérisée en ce que la tension d'alimentation du circuit (TR) d'attaque est obtenue à partir de la tension de sortie du montage dévolteur.
